# EUROPÄISCHE PATENTSCHRIFT

(11) **EP 1 666 430 B1**
(45) Veröffentlichungstag und Bekanntmachung des Hinweises auf die Patenterteilung: **11.11.2009**
(21) Anmeldenummer: 05026084.3
(22) Anmeldetag: 30.11.2005
(51) Int. Cl.: C04B 14/22, C04B 20/12, C04B 26/06, C04B 26/14, C04B 26/16, C04B 26/18, C04B 28/26

(54) **Fugenfüllmaterial**
Joint filling material
Masse de remplissage pour joints

(30) Priorität: 02.12.2004 DE 102004058311
(43) Veröffentlichungstag der Anmeldung: 07.06.2006
(73) Patentinhaber: Voss, Stefan, 28755 Bremen (DE)
(72) Erfinder: Esser, Rudolf, 28215 Bremen (DE)
(74) Vertreter: Ellberg, Nils

(56) Entgegenhaltungen:
- WO-A-02/076904
- WO-A-2004/031094
- DE-A1- 3 932 171
- DE-A1- 10 152 060
- DE-A1- 19 939 267
- DE-B1- 2 708 839
- GB-A- 1 360 638
- JP-A- 2002 285 006
- US-B1- 6 514 595

## Beschreibung

Die Erfindung betrifft ein Fugenfüllmaterial, insbesondere einen Fugenmörtel, für plattenförmige Bauteile gemäß dem Oberbegriff des Anspruchs 1. Weiterhin betrifft die Erfindung die Verwendung des Fugenfüllmaterials zur Herstellung eines Klebers bzw. einer Dehnungsfuge.

Die in Rede stehenden Fugenfüllmaterialien bestehen in der Regel aus Bindemittel und Zuschlagstoff(en). Gegebenenfalls werden noch Zusatzmittel zur Erzielung besonderer Effekte oder besonderer Eigenschaften zugegeben. Die Fugenfüllmaterialien eignen sich zur Verfugung von zwischen benachbarten plattenförmigen Bauteilen angeordneten Fugen im Boden-, Wand- oder Deckenbereich von Bauwerken.

Ein Fugenfüllmaterial mit Zement als Bindemittel und Glasperlen als Zuschlagstoff ist aus der DE 199 39 267 A1 bekannt. Der Zuschlagstoff kann farbig sein.

Der Erfindung liegt die Aufgabe zugrunde, bekannte Fugenfüllmaterialen der eingangs genannten Art weiterzuentwickeln.

Zur Lösung dieser Aufgabe ist vorgesehen, dass das Bindemittel transparent oder im Wesentlichen transparent ist.

Die auf diese Weise hergestellte Fuge ist im Ergebnis einerseits farbig, andererseits aber auch transparent durchscheinend, etwa in Art eines eingefärbten Glases. Auch die Oberfläche ist "glasartig". Das Fugenfüllmaterial weist damit auch ein ansprechendes Äußeres auf und ermöglicht die Erzielung besonderer optischer Wirkungen. Im Unterschied zu Fugenfüllmaterialien, die aus gebrochenen Zuschlagstoffen bestehen, lässt sich das erfindungsgemäße Fugenfüllmaterial aufgrund des perlenförmigen Zuschlagstoffs sehr leicht verarbeiten.

Vorzugsweise weisen die Glasperlen derartige Durchmesser auf, dass das (abgebundene) Fugenfüllmaterial eine glatte, insbesondere glasartige Oberfläche aufweist. Es wird insbesondere vorgeschlagen, durch Verwendung entsprechender Durchmesser des Zuschlagstoffes eine besonders glatte Oberfläche zu erstellen. Dies erfolgt dadurch, dass die Glasperlen einen maximalen Durchmesser aufweisen, der kleiner als 150 µm ist. Das Fugenfüllmaterial ist damit besonders leicht zu reinigen. Insbesondere lassen sich wegen der glatten Oberfläche Verschmutzungen, wie Graffiti, besonders leicht entfernen. Das Fugenfüllmaterial eignet sich somit insbesondere zum Einsatz in graffitigefährdeten Flächen im Außenbereich.

In einer bevorzugten Weiterbildung der Erfindung sind wenigstens einige Glasperlen transparent oder im Wesentlichen transparent ausgebildet. Maßnahmen zur Erzielung der colorierenden Wirkung oder besonderer Eigenschaften sind Gegenstand von Unteransprüchen.

Weiterhin kann das erfindungsgemäße Fugenfüllmaterial bei der Herstellung eines Klebers für plattenförmige Bauteile oder einer Dehnfuge zum Einsatz kommen.

### Beschreibung von Ausführungsbeispielen:

Bei der Herstellung eines Fugenfüllmaterials kommt ein transparentes oder im Wesentlichen transparentes Bindemittel zum Einsatz, dass diese Eigenschaft wenigstens nach dem Abbinden des Fugenfüllmaterials aufweist. Denkbar ist beispielsweise der Einsatz folgender Bindemittel:
- (2-Komponenten) Epoxydharz
- Acrylate
- Wasserglas
- Polyester
- (1-Komponenten oder 2-Komponenten) Polyurethane
- redispergierbare (Pulver-)Dispersion

Demnach wird vorgeschlagen vorzugsweise zementfreie Bindemittel zu verwenden. Auf diese Weise können die mit dem Fugenfüllmaterial hergestellten Fugen säurebeständig bzw. chemikalienbeständig sein und auch mit scharfen Reinigungsmitteln behandelt werden.

Als Zuschlagstoff kommen transparente oder im Wesentlichen transparente Glasperlen zum Einsatz. Der maximale Durchmesser der Glasperlen darf 150 µm nicht überschreiten. Den Glasperlen kann auch ein geringer Anteil, insbesondere von weniger als 20 % Glasmehl bzw. Quarzmehl als Füllstoff zugegeben werden. Vorzugsweise werden Glasperlen mit unterschiedlichen Durchmessern benutzt, so dass die Oberfläche der Fuge möglichst glatt ist, Die Glasperlen können mit Silanen (beispielsweise Fabr. GENIOSIL^{®}) beschichtet sein, um die Haftung zu erhöhen. Die Glasperlen können auch antistatisch ausgerüstet sein.

Zur Erzielung einer colorierenden Wirkung können folgende Maßnahmen einzeln oder in sinnvoller Kombination miteinander vorgesehen sein:
- die Glasperlen können opak durchgefärbt sein,
- die Glasperlen können mit einer vorzugsweise lösungsmittelbeständigen Oberflächenbeschichtung versehen sein,
- die Glasperlen können mit einer vorzugsweise eingebrannten Oberflächenfärbung versehen sein,
- die Glasperlen können vorzugsweise lösungsmittelbeständig silberbeschichtet sein und insbesondere eine zusätzliche Silanesierung aufweisen,
- die Glasperlen können irisierend bedampft sein,
- die Glasperlen können mit einer lösungsmittelbeständigen Tagesleuchtfarbe beschichtet sein.

Aufgrund der Transparenz des Bindemittels bleibt die colorierende Wirkung des Zuschlagstoffes, d.h. die Farbgebung bzw. Effektgebung der Glasperlen sichtbar. Dies ermöglicht die Herstellung von farbigen Fugen, die einerseits eine gewisse Transparenz bzw. Durchsichtigkeit aufweisen und andererseits farblich oder anderweitig gestaltet sind, beispielsweise etwa wie ein eingefärbtes Glas. Zudem ist die Oberfläche mit einem geschlossenen, glatten Gefüge ausgestattet, so dass insbesondere aufgesprühte Farbpigmente nicht in die Fuge eindringen können und/oder leicht von der Oberfläche der Fuge entfernt werden können.

Die Farb- bzw. Effektgebung des Fugenfüllmaterials bzw. der daraus hergestellten Fuge wird demnach nicht dadurch erzielt, dass dem Bindemittel ein Pigment zugegeben wird, sondern über eine besondere Ausstattung bzw. Behandlung der Glasperlen.

Um den gewünschten Effekt zu erzielen, müssen nicht alle Glasperlen entsprechend ausgestattet sein. Es kann ausreichend sein nur Glasperlen ab einer bestimmten Größe zu behandeln und beispielsweise sehr kleine Glasperlen und das Glasmehl bzw. das Quarzmehl transparent zu belassen.

Weiterhin besteht die Möglichkeit die Glasperlen mit Nanotechnik zu behandeln, beispielsweise mit Nanopool^{®}, um die Fuge wasserabweisend zu machen. Dies erhöht zusätzlich den Schutz gegen Graffitis.

Als Einsatzgebiet für das erfindungsgemäße Fugenfüllmaterial sind beispielsweise folgende plattenförmige Beläge denkbar:
- keramische Fliesenbeläge
- Glasmosaik
- Natursteine, Marmor, Granit etc.
- PVC-, PUR- oder Melaninharzplatten
- Pflastermörtel
- Cottobeläge
- Steingut (glasiert und unglasiert)
- Steinzeug (glasiert und unglasiert)
- Spaltplatten

Selbstverständlich sind auch andere Beläge in Betracht zu ziehen.

Das Einbringen des Fugenfüllmaterials kann über Kartuschen mit gebrauchsfertig abgefüllter Ware erfolgen. Die Verarbeitung erfolgt im Prinzip wie bei Fugenfüllmaterialien üblich, jedoch kommt vorzugsweise ein Fugenbrett zum Einsatz, das mit einer weichen, schrägen Gummikante, Gummilippe versehen ist.

Weiterhin ist es möglich, das Fugenfüllmaterial als (farbigen) Kleber zu verwenden, indem die Mischung verdünnt wird. Auf diese Weise ist es möglich, einen Kleber zur Verfügung zu stellen, der die gleiche Farbe aufweist wie das Fugenfüllmaterial. Durch elastische Einstellung des Fugenfüllmaterials ist die Verwendung als Material für Dehnungsfugen denkbar. Dies kann erfolgen durch eine elastifizierte, flüssige Dispersion, eine elastische Pulverdispersion, ein elastisches Zweikomponentenepoxydharz, ein elastisches Pulverharz oder ein elastisches Polyurethan als Bindemittel.

## Patentansprüche

1. Fugenfüllmaterial, insbesondere Fugenmörtel, für plattenförmige Bauteile, aus einem Bindemittel und aus einem Zuschlagstoff, wobei der Zuschlagstoff im Wesentlichen aus Glasperlen besteht, die Glasperlen einen maximalen Durchmesser aufweisen, der kleiner als 150 µm ist, und der Zuschlagstoff zur Einfärbung des Fugenfüllmaterials colorierende Eigenschaften aufweist, **dadurch gekennzeichnet, dass** das Bindemittel transparent oder im Wesentlichen transparent ist.

2. Fugenfüllmaterial nach Anspruch 1, **dadurch gekennzeichnet, dass** die Glasperlen transparent oder im Wesentlichen transparent sind.

3. Fugenfüllmaterial nach Anspruch 1, **dadurch gekennzeichnet, dass** wenigstens einige Glasperlen durchgefärbt, insbesondere opak durchgefärbt, sind.

4. Fugenfüllmaterial nach einem der vorhergehenden Ansprüche, **dadurch gekennzeichnet, dass** wenigstens einige Glasperlen zur Haftvermittlung mit Silanen beschichtet sind.

5. Fugenfüllmaterial nach einem der vorhergehenden Ansprüche, **dadurch gekennzeichnet, dass** wenigstens einige Glasperlen antistatisch ausgerüstet sind.

6. Fugenfüllmaterial nach einem der vorhergehenden Ansprüche, **dadurch gekennzeichnet, dass** wenigstens einige Glasperlen mit einer Oberflächenbeschichtung versehen sind, die insbesondere lösungsmittelbeständig ist.

7. Fugenfüllmaterial nach einem der vorhergehenden Ansprüche, **dadurch gekennzeichnet, dass** wenigstens einige Glasperlen oberflächengefärbt sind, wobei die Oberflächenfärbung vorzugsweise eingebrannt ist.

8. Fugenfüllmaterial nach einem der vorhergehenden Ansprüche, **dadurch gekennzeichnet, dass** wenigstens einige Glasperlen insbesondere lösungsmittelbeständig silberbeschichtet sind und vorzugsweise zusätzlich silanisiert sind.

9. Fugenfüllmaterial nach einem der vorhergehenden Ansprüche, **dadurch gekennzeichnet, dass** wenigstens einige Glasperlen irisierend bedampft sind.

10. Fugenfüllmaterial nach einem der vorhergehenden Ansprüche, **dadurch gekennzeichnet, dass** wenigstens einige Glasperlen insbesondere lösungsmittelbeständig mit Tagesleuchtfarben beschichtet sind.

11. Verwendung des Fugenfüllmaterials nach einem der vorhergehenden Ansprüche zur Herstellung eines (farbigen) Klebers für plattenförmige Bauteile.

12. Verwendung des Fugenfüllmaterials nach einem der Ansprüche 1 bis 10 zur Herstellung einer (farbigen) Dehnungsfuge.

## Claims

1. Joint filling material, in particular joint mortar, for tile-like components, comprising a binder and comprising an additive, the additive substantially consisting of glass beads, the glass beads having a maximum diameter which is less than 150 µm, and the additive having colouring properties for colouring the joint filling material, **characterized in that** the binder is transparent or substantially transparent.

2. Joint filling material according to Claim 1, **characterized in that** the glass beads are transparent or substantially transparent.

3. Joint filling material according to Claim 1, **characterized in that** at least some glass beads are coloured throughout, in particular have an opaque colour throughout.

4. Joint filling material according to any of the preceding claims, **characterized in that** at least some glass beads are coated with silanes for adhesion promotion.

5. Joint filling material according to any of the preceding claims, **characterized in that** at least some glass beads have an antistatic treatment.

6. Joint filling material according to any of the preceding claims, **characterized in that** at least some glass beads are provided with a surface coating which is in particular solvent-resistant.

7. Joint filling material according to any of the preceding claims, **characterized in that** at least some glass beads are coloured on the surface, the surface colouring preferably being fired in.

8. Joint filling material according to any of the preceding claims, **characterized in that** at least some glass beads are in particular silver-coated so as to be solvent-resistant and are preferably additionally silanized.

9. Joint filling material according to any of the preceding claims, **characterized in that** at least some glass beads are made iridescent by vapour deposition.

10. Joint filling material according to any of the preceding claims, **characterized in that** at least some glass beads are in particular coated with fluorescent day-glow colours in a solvent-resistant manner.

11. Use of the joint filling material according to any of the preceding claims for the preparation of a (coloured) adhesive for tile-like components.

12. Use of the joint filling material according to any of Claims 1 to 10 for the production of a (coloured) expansion joint.

## Revendications

1. Matériau pour colmatage de joints, en particulier mortier à joints, pour éléments de construction en forme de plaques, à base d'un liant et d'un granulat, le granulat étant essentiellement constitué de perles de verre, les perles de verre ayant un diamètre maximum qui est inférieur à 150 µm, et le granulat ayant des propriétés colorantes pour la coloration du matériau pour colmatage de joints, **caractérisé en ce que** le liant est transparent ou pratiquement transparent.

2. Matériau pour colmatage de joints selon la revendication 1, **caractérisé en ce que** les perles de verre sont transparentes ou pratiquement transparentes.

3. Matériau pour colmatage de joints selon la revendication 1, **caractérisé en ce qu'**au moins certaines perles de verre sont colorées dans la masse, en particulier colorées opaques dans la masse.

4. Matériau pour colmatage de joints selon l'une quelconque des revendications précédentes, **caractérisé en ce que** au moins certaines perles de verre sont revêtues avec des silanes pour promouvoir l'adhérence.

5. Matériau pour colmatage de joints selon l'une quelconque des revendications précédentes, **caractérisé en ce qu'**au moins certaines perles de verre sont munies d'un traitement antistatique.

6. Matériau pour colmatage de joints selon l'une quelconque des revendications précédentes, **caractérisé en ce qu'**au moins certaines perles de verre sont munies d'un revêtement superficiel qui est en particulier résistant aux solvants.

7. Matériau pour colmatage de joints selon l'une quelconque des revendications précédentes, **caractérisé en ce qu'**au moins certaines perles de verre sont colorées en surface, la coloration superficielle étant de préférence recuite.

8. Matériau pour colmatage de joints selon l'une quelconque des revendications précédentes, **caractérisé en ce qu'**au moins certaines perles de verre sont munies d'un revêtement argenté en particulier résistant aux solvants et de préférence en outre silanées.

9. Matériau pour colmatage de joints selon l'une quelconque des revendications précédentes, **caractérisé en ce qu'**au moins certaines perles de verre sont revêtues par vaporisation d'un revêtement iridescent.

10. Matériau pour colmatage de joints selon l'une quelconque des revendications précédentes, **caractérisé en ce qu'**au moins certaines perles de verre sont revêtues de couleurs luminescentes en particulier résistantes aux solvants.

11. Utilisation du matériau pour colmatage de joints selon l'une quelconque des revendications précédentes, pour la fabrication d'une colle (colorée)) pour éléments de construction en forme de plaques.

12. Utilisation du matériau pour colmatage de joints selon l'une quelconque des revendications 1 à 10, pour la production d'un joint (coloré) de dilatation.
